# DEMANDE DE BREVET EUROPEEN

(11) **EP 1 276 345 A1**
(43) Date de publication de la demande: **15.01.2003**
(21) Numéro de dépôt: 02291672.0
(22) Date de dépôt: 04.07.2002
(51) Int. Cl.: H04Q 7/38

(54) **Procèdè de traitement d'appels UMTS dans un réseau de transmission de paquets, et noeud pour réseau UMTS, pour la mise en oeuvre de ce procédé**

(30) Priorité: 09.07.2001 FR 0109087
(71) Demandeur: ALCATEL, 75008 Paris (FR)
(72) Inventeur: Besset-Bathias, Claire, 92200 Neuilly Sur Seine (FR); Bourriaud, Francis, 91160 Longjumeau (FR); Ballot, Jean-Marc, 92400 Courbevoie (FR)
(74) Mandataire: Sciaux, Edmond

(57) **Abrégé**

Pour accepter l'établissement d'un nouvel appel dans un noeud pour réseau UMTS, il consiste notamment à :
- calculer pour ce nouvel appel une bande passante équivalente en fonction de :
   -- la qualité de service demandée pour ce nouvel appel ;
   -- des attributs de qualité de service du support UMTS correspondant à cet appel ;
- puis comparer la somme de la bande passante équivalente pour le nouvel et des bandes passantes équivalentes pour tous les appels déjà établis dans ce noeud pour réseau UMTS, avec une valeur maximale prédéterminée ;
- et accepter le nouvel appel en garantissant la qualité de service demandée, seulement si la somme est inférieure ou égale à cette valeur maximale prédéterminée.

## Description

L'invention concerne un procédé de traitement d'appels UMTS dans un réseau de transmission de paquets, et un noeud pour la mise en oeuvre de ce procédé. Le système UMTS (Universal Mobile Telecommunication System) est un système de téléphonie mobile de troisième génération. Ce sytème comporte un coeur de réseau constitué d'un réseau de transmission de paquets de données.

Le système de téléphonie mobile utilisé actuellement en Europe est un système de deuxième génération (Système GSM) essentiellement destiné à fournir des services de téléphonie et de transmission de données en mode circuit, ainsi qu'un petit nombre de télé services en mode paquet, comme le service de messages courts. Il comporte un réseau de coeur constitué essentiellement d'un réseau à commutation de circuits. Un sous-système radio a pour rôle d'allouer des canaux de trafic radio en mode circuit, et de maintenir la continuité des communications établies pour les usagers mobiles, grâce à des procédures de transfert intercellulaire. La qualité de service repose principalement sur la qualité du réseau fixe à commutation de circuits.

Les services de données ne représentent qu'une part marginale du trafic global et les critères de qualité de service sont principalement : la probabilité de blocage à l'heure chargée, le taux de coupure de communication et la qualité vocale subjective. Dans ce contexte, la planification des fréquences et le dimensionnement des ressources radio sont primordiaux pour fournir la couverture radio et la capacité de trafic appropriées.

Des développements récents, comme le codage multidébit adaptatif et l'exploitation sans transcodage dans le sous-système radio, visent à améliorer la qualité de service pour la téléphonie mobile en mode circuit. Avec l'essor de l'Internet, on a introduit des services de radiocommunication en mode paquet (GPRS, General Packet Radio Service) pour offrir de manière efficace des services de données en mode paquet, de bout en bout dans les réseaux GSM. Malgré les efforts déployés par les organismes de normalisation pour affiner la gestion de la qualité de service en tenant compte de la nécessité d'une différenciation des applications et des abonnés, les systèmes GPRS actuels sont considérés, en règle générale, comme assurant un service « au mieux ». Cependant, sous le contrôle du réseau de coeur, il est possible de fournir des niveaux de qualité de service relatifs.

Les systèmes de deuxième génération ont été développés pour le transport de la voix, à un moment où 75% du trafic des opérateurs européens était essentiellement téléphonique. Ils ont été optimisés pour préserver l'isochronisme de la voix, et pour offrir des services téléphoniques en exploitant une architecture de réseau intelligent. L'introduction de l'Internet a été accompagnée d'un accroissement du trafic de données. La question se pose aujourd'hui de déployer un réseau mobile adapté à la fois au transport du trafic Internet et à celui du trafic vocal.

Les systèmes de troisième génération vont améliorer considérablement la situation pour tous les types de service (services de téléphonie, de données, ou multimédias), car la gestion de la qualité de service est un des concepts sous-jacents des spécifications élaborées dans le cadre du projet de partenariat pour la troisième génération (3GPP). Ils ont été conçus pour utiliser un même support de transmission, qu'il soit radio ou terrestre, pour le transport des applications en mode paquet et en mode circuit. Les informations issues de différentes sources indépendantes seront multiplexées sur un même support de transmission. L'infrastructure UMTS devra donc supporter des trafics dont les besoins en bande passante et en qualité de service sont très différents les uns des autres.

Le trafic généré par les services de transfert de données et les services d'accès à l'Internet est particulièrement sporadique et imprévisible. La transmission de données entre machines s'accommode mal des pertes mais n'est généralement pas sensible au délai de transmission de bout en bout, ou à la gigue. En revanche, la parole et, d'une manière plus générale, toutes les applications en temps réel tolèrent des taux de pertes raisonnables mais exigent des délais de transmission strictement limités. Par exemple, le délai de transmission de bout en bout pour la voix doit rester inférieur à 400 ms, même en utilisant des annuleurs d'écho.

L'une des principales difficultés pour la réalisation de l'infrastructure UMTS est donc de transporter les données de différents types d'applications sur un même support tout en respectant des objectifs de qualité de service fixés.

Pour répondre à ces exigences, le 3GPP a défini quatre classes de qualité de service (Recommandation TS 23.107) respectivement pour les applications conversationnelles, à flux continu, interactives, et d'arrière-plan. Le tableau ci-dessous donne des exemples d'applications associées aux différentes classes de qualité de service, et indique les attributs de qualité de service utilisés pour définir ces classes de qualité de service dans un système UMTS.

| **Type de trafic** | **Délai** | **Variation du délai** | **Faible taux d'erreurs sur les bits** | **Débit binaire garanti** | **Exemple** |
|---|---|---|---|---|---|
| **Trafic conversationnel** | Strict | Stricte | Non | Oui | VoIP, visioconférence, audioconférence |
| **Trafic à flux continu** | Limité | Limitée | Non | Oui | Services de diffusion (audio, vidéo), actualités, sports |
| **Trafic interactif** | Limité | Non | Oui | Non | Navigation sur la toile, cyberbavardage, jeux, commerce mobile |
| **Trafic d'arrière-plan** | Non | Non | Oui | Non | Courrier électronique, SMS, téléchargement de bases de données, transfert de mesures |

Il est également essentiel que les ressources de transmission de l'infrastructure UMTS soient utilisées efficacement (spectre radioélectrique, mais aussi ressources de transmission terrestre) notamment dans la partie accès : elle doit permettre la fourniture d'un service de transfert économique, en réduisant au minimum les dépenses d'investissement et les coûts d'exploitation. Il est primordial de réaliser un gain de multiplexage statistique. Il faut, en particulier, charger au maximum les liens de transmission et l'interface radio tout en satisfaisant aux exigences de qualité de service. Par conséquent, la recherche de l'optimisation de la charge est de très haute importance.

Un des moyens pour cette optimisation est le traitement d'appels au niveau application UMTS. Il décide si un appel UMTS peut être accepté par le réseau de coeur UMTS, compte tenu du fait qu'il doit lui assurer une qualité de service prédéterminée pendant toute la durée d'un appel établi, et qu'il doit maintenir la qualité de service des autres appels UMTS déjà établis. Ce traitement d'appels est réalisé dans tous les ports et tous les noeuds pour réseau UMTS de chaque noeud d'un réseau UMTS. Il doit tenir compte du fait que les paquets de données sont stockés provisoirement dans des mémoires tampons ayant des capacités limitées.

Le but de l'invention est de proposer un procédé de traitement des appels UMTS, au niveau application UMTS, qui soit simple, rapide, efficace, et robuste (c'est à dire qui fonctionne aussi bien lors d'une forte charge que lors d'une faible charge).

L'objet de l'invention est un procédé de traitement d'appels UMTS dans un réseau de transmission de paquets, ce réseau comportant des noeuds pour réseau UMTS ;
**caractérisé** en ce que pour accepter l'établissement d'un nouvel appel UMTS dans un noeud pour réseau UMTS, il consiste notamment à :
- calculer pour ce nouvel appel une bande passante équivalente en fonction de :
   -- la qualité de service demandée pour ce nouvel appel ;
   -- des attributs de qualité de service du support UMTS correspondant à cet appel ;
- puis comparer la somme de la bande passante équivalente pour le nouvel appel et des bandes passantes équivalentes pour tous les appels déjà établis dans ce noeud pour réseau UMTS, avec une valeur maximale prédéterminée ;
- et accepter le nouvel appel en garantissant la qualité de service demandée, seulement si la somme est inférieure ou égale à cette valeur maximale prédéterminée.

L'invention a aussi pour objet un noeud pour un réseau de transmission de paquets supportant un système radiotéléphonique UMTS, pour la mise en oeuvre de ce procédé ; **caractérisé** en ce que ce noeud comporte :
- des moyens pour calculer pour chaque nouvel appel une bande passante équivalente en fonction de :
   -- la qualité de service demandée pour ce nouvel appel ;
   -- des attributs de qualité de service du support UMTS correspondant à cet appel ;
- des moyens pour comparer la somme de la bande passante équivalente pour le nouvel et des bandes passantes équivalentes pour tous les appels déjà établis dans ce noeud pour réseau UMTS, avec une valeur maximale prédéterminée ;
- et des moyens pour accepter le nouvel appel en garantissant la qualité de service demandée, seulement si la somme est inférieure ou égale à cette valeur maximale prédéterminée.

L'invention sera mieux comprise et d'autres caractéristiques apparaîtront à l'aide de la description ci-dessous et des figures l'accompagnant :
- La figure 1 représente le schéma synoptique d'un exemple de réseau UMTS.
- La figure 2 représente l'organigramme d'un exemple de mise en oeuvre du procédé selon l'invention.
- La figure 3 représente de manière plus détaillée une partie de cet organigramme.

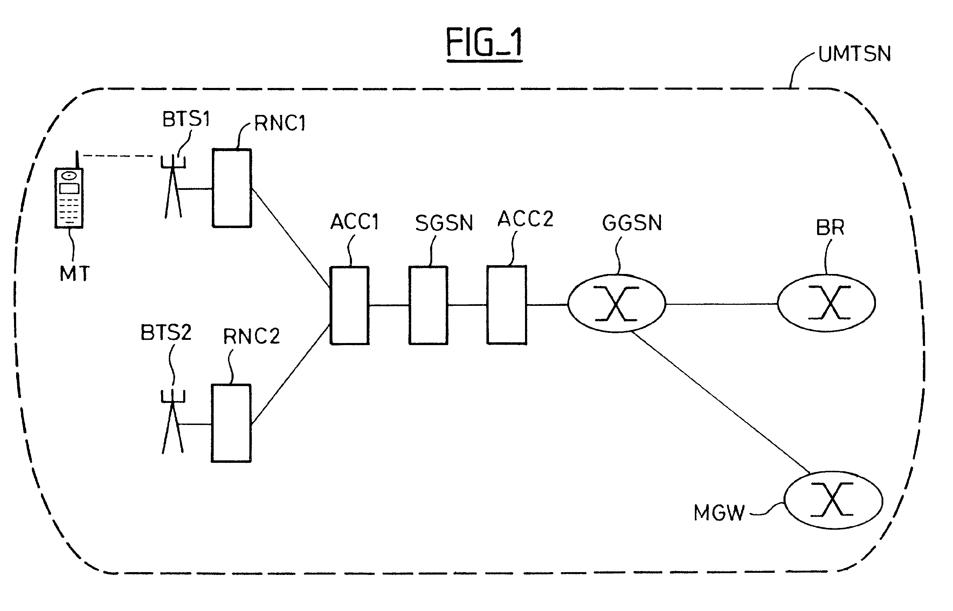

L'exemple UMTSN de réseau UMTS représenté sur la **figure 1** comporte :
- des brasseurs de type ATM (Asynchronous Transfer Mode), ACC1 et ACC2 ;
- un noeud de support GPRS de transit, GGSN ;
- un noeud de support GPRS de desserte, SGSN ;
- un routeur périphérique BR relié à un site client CS ;
- une passerelle multimédia MGW ;
- des noeuds d'accès distant RNC1 et RNC2 ;
- et un sous-système radio constitués de stations de base BTS1 et BTS2 reliées respectivement aux noeuds d'accès distant RNC1 et RN2, et reliés à des terminaux MT par des liaisons radio.

Les brasseurs ACC1 et ACC2, le noeud de support GPRS de transit, GGSN , et le noeuds de support GPRS de desserte, SGSN sont interconnectés par un réseau mettant en oeuvre le protocole Internet, pour constituer le coeur de ce réseau UMTS.

Des mécanismes, assurant un support complet de la qualité de service, sont mis en place à tous les niveaux du système UMTS.

Au niveau application, un contrôle d'admission d'appel est utilisé dans chaque noeud de réseau UMTS. Des mécanismes de gestion équitable des files d'attente, et des mécanismes de contrôle de congestion, permettant de supporter les différentes qualités de service requises par les applications des abonnés, sont donc exécutés à l'intérieur :
-- du noeud de support GPRS de transit, GGSN ;
-- du noeuds de support GPRS de desserte, SGSN ;
-- des noeuds d'accès distant RNC1 et RNC2 ;
-- et de la passerelle multimédia MGW.

Une fonction de police est assurée en outre à l'intérieur du noeud de support GPRS de transit, GGSN, pour le trafic entrant dans le coeur du réseau (en direction du brasseur ACC2).

Au niveau de la couche réseau, le support de la qualité de service s'effectue grâce aux services différenciés IP classiques (appelés DiffServ).

Au niveau de la couche liaison, on peut utiliser la commutation en environnement multiprotocole avec étiquetage des flux (appelé MPLS) sur des interfaces appelées Gn et Gi ; et le mode de transfert asynchrone (ATM) sur une interface appelée lu.

Le contrôle d'admission d'appel au niveau application est fondé sur le concept de bande passante équivalente. Il s'agit d'estimer les ressources nécessaires pour obtenir la qualité de service demandée ; et de déterminer si ces ressources sont disponibles ou non. Si c'est le cas, elles sont réservées. Si elles ne sont pas disponibles, une autre procédure permet de réduire la qualité de service demandée (si l'application le permet).

Le contrôle d'admission d'appel est activé par les événements suivants :
- à chaque établissement d'appel en mode paquet, UMTS ou GSM ;
- à chaque modification de qualité de service :
   -- à chaque changement de noeud de support GPRS de desserte SGSN, dû à la mobilité d'un abonné (modification de la qualité de service dans le nouveau noeud SGSN, à son initiative),
   -- demandée par un terminal mobile (c'est à dire lors de la réception d'une requête de modification du contexte),
   -- demandée par un noeud GGSN de support GPRS de transit (c'est à dire lors de la réception d'une requête de mise à jour du contexte),
- lors d'une modification du flux de paquets dans le sous-système radio, à la demande de ce sous-système ;
- pendant une procédure de requête de service (au cours du rétablissement d'un canal de communication de l'accès radio, après une requête de service) ;
- après une procédure de mise à jour de paramètres de l'abonnement, entraînant un changement de la qualité de service (sur demande de l'enregistreur nominal de l'abonné) ;
- périodiquement, pour les contextes dont la qualité de service a été réduite (afin d'offrir ultérieurement une meilleure qualité de service si de nouvelles ressources deviennent disponibles) ;
- dans le cas du transfert intercellulaire d'un terminal mobile (« handover ») ;
- dans le cas d'une relocalisation d'un sous-système réseau radio de desserte , c'est à dire dans le cas où un terminal mobile va dans une cellule desservie par un autre noeud d'accès distant RNC ;
- le changement de noeud de support GPRS de transit SGSN d'un terminal mobile ;
- le changement de noeud de support GPRS de desserte GGSN d'un terminal mobile.

Cependant, dans un noeud SGSN ou GGSN donné, le contrôle d'admission d'appels peut n'être activé que par un sous-ensemble de ces événements. De plus, pour garantir la qualité de service au niveau de toutes les couches (et pas seulement au niveau application UMTS), un autre contrôle d'admission d'appels tient compte des ressources disponibles de la couche de transport IP. Un autre contrôle d'admission d'appel est également actif au niveau de la couche liaison (ATM et/ou MPLS).

Au niveau application UMTS, certains mécanismes isolent le trafic provenant de chaque équipement d'usager UMTS. Nous pouvons citer, par exemple, les mécanismes de gestion des files d'attente et de congestion, mis en oeuvre à l'intérieur des noeuds de support GPRS de desserte, SGSN, et des noeuds de support GPRS de transit, GGSN, ou encore la fonction de police et les modèles de flux de trafic mis en oeuvre à l'intérieur du noeud GGSN.

Les techniques d'ordonnancement, comme la gestion équitable des files d'attente avec pondération ou l'ordonnancement cyclique avec pondération permettent de gérer les contentieux pour l'utilisation d'une ressource. Elles garantissent l'allocation d'un minimum de bande passante, à chaque contexte. Elles assurent une fonction de police implicite, avec la particularité intéressante que cette fonction n'intervient que lorsque l'élément de réseau est engorgé. La police implicite est une fonctionnalité obligatoire pour respecter l'engagement en matière de qualité de service pris vis-à-vis d'un usager : en cas d'engorgement dans le réseau, elle contrôle que le comportement de l'usager est bien conforme à son contrat de trafic afin d'éviter qu'un usager qui aurait un comportement illicite (volontaire ou non) puisse altérer la qualité de service fournie aux autres usagers.

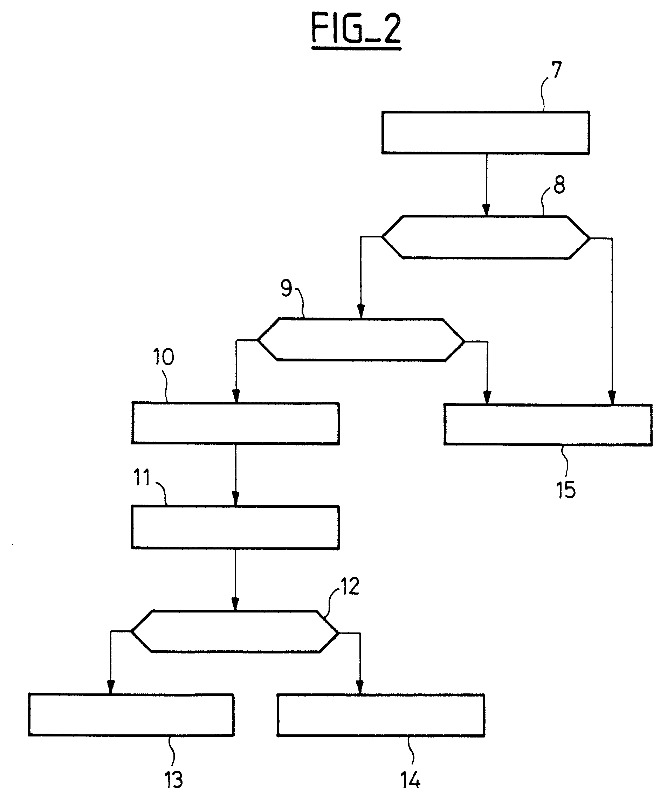

La **figure 2** représente l'organigramme d'un exemple de mise en oeuvre du procédé selon l'invention, pour le contrôle d'admission d'un nouvel appel, à l'entrée d'un noeud pour réseau UMTS considéré. Il comporte une étape de calcul d'une bande passante équivalente en fonction des paramètres de trafic qui figurent dans le contexte d'un appel et qui sont définis par un contrat avec l'abonné demandant l'établissement de l'appel. Cette bande passante équivalente permet de représenter des besoins de ressources en vue d'additionner des besoins de ressources et de répartir les ressources disponibles.
Etape 7 : Un événement déclencheur, parmi ceux mentionnés ci-dessus, déclenche la procédure de contrôle d'admission.
Etape 8 : Le nombre de contextes activés, c'est à dire le nombre d'appels déjà établis dans le noeud pour réseau UMTS considéré, est comparé à une valeur maximale M fixée en fonction des caractéristiques de ce noeud pour réseau UMTS ; Si le nombre de contextes activés est supérieur à M :
Etape 15 : rejet de la demande.
   Si le nombre de contextes activés est inférieur à M :
Etape 9 : Le niveau de qualité de service demandé est comparé avec celui mentionné dans le contrat d'abonnement.
   Si le niveau de qualité de service demandé est supérieur à celui mentionné dans le contrat d'abonnement :
Etape 15 : rejet de la demande.
   Si le niveau de qualité de service demandé est inférieur ou égal à celui mentionné dans le contrat d'abonnement :
Etape 10 : Une bande passante équivalente est calculée, pour le nouvel appel et pour chacun des appels qui sont déjà établis dans le noeud pour réseau UMTS considéré, selon un procédé décrit plus loin.
Etape 11 : Les bandes passantes équivalentes correspondant à tous ces appels sont additionnées.
Etape 12 : Cette somme est comparée à la bande passante R disponible à l'instant considéré dans le noeud pour réseau UMTS considéré.
Etape 13 : Si la somme est supérieure à R, la qualité du nouvel appel est réduite (si c'est possible) ou le nouvel appel est rejeté (s'il n'est pas possible de réduire sa qualité).
Etape 14 : Si la somme est inférieure ou égale à R, le nouvel appel est accepté, les ressources correspondantes sont réservées. Un message « CREATE PDP CONTEXT » est envoyé par le noeud de support GPRS de desserte, SGSN, au noeud de support GPRS de transit, GGSN. Si ce dernier répond négativement parce qu'il ne peut fournir le débit binaire demandé, le noeud de support GPRS de desserte, SGSN, peut essayer d'activer le même contexte dans un autre noeud support GPRS de transit, GGSN. Si le noeud GGSN réduit la qualité de service, le noeud SGSN modifie les données enregistrées concernant les ressources réservées.

Quand un contexte est désactivé (fin d'un appel ou déplacement d'un usager) sa bande passante équivalente n'est plus prise en compte dans l'étape 11 de calcul de la somme des bandes passantes.

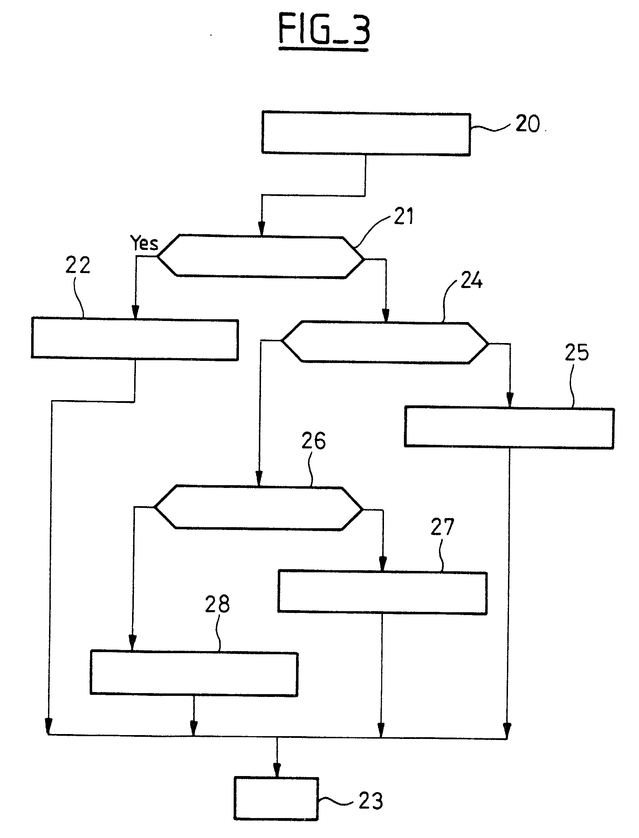

La **figure 3** représente de manière plus détaillée l'opération 10 de calcul de la bande passante équivalente correspondant à un appel. Cette procédure est donnée à titre d'exemple. Le procédé selon l'invention peut être mis en oeuvre avec d'autres procédures de calcul de la bande passante équivalente.
Etape 20 : Démarrage de la procédure de calcul de la bande passante équivalente, à partir du contexte d'un appel.
Etape 21 : Test de la classe de trafic contenue dans ce contexte :
   Si c'est un trafic conversationnel :
      -- Etape 22 : Calcul de la bande équivalente selon la formule : EB = Min[MBR, GBR+alpha(MBR-GBR)] , où MBR est la valeur maximale du débit binaire, et GBR la valeur garantie de débit binaire, attributs de qualité de service, qui font partie du contexte du nouvel appel ; et où alpha une constante ;
      -- Etape 23 : Fin de la procédure.
   Si ce n'est pas un trafic conversationnel : Etape 24 : Test de la classe de trafic contenue dans ce contexte :
      Si c'est un trafic à flux continu :
         -- Etape 25 : Calcul de la bande équivalente selon la formule : EB=Min[MBR, GBR+beta(MBR-GBR)], où beta est une constante ;
         -- Etape 23 : Fin de la procédure.
      Si ce n'est pas un trafic à flux continu : Etape 26 : Test de la classe de trafic contenue dans ce contexte :
         Si c'est un trafic à flux interactif :
            -- Etape 27 : Calcul de la bande équivalente selon la formule : EB=MBR . b, où b est une constante qui est fonction du niveau de priorité de traitement de ce trafic (une valeur fixée par défaut, ou fixée par un gestionnaire du réseau) ;
            -- Etape 23 : Fin de la procédure.
         Si ce n'est pas un trafic à flux interactif :
            -- Etape 28 : Calcul de la bande équivalente selon la formule : EB=Min (C0, MBR) où C0 est une constante de faible valeur, par exemple 10 bits par seconde ;
            -- Etape 23 : Fin de la procédure.

Les constantes alpha, beta, b, et C0 sont choisies par l'opérateur exploitant le réseau, en fonction de sa politique de gestion du réseau. Les valeurs des paramètres MBR, GBR, et les autres attributs de la qualité de service, font partie du contexte de chaque appel, et elles sont comparées par rapport aux valeurs contractuelles de ces mêmes paramètres, stockées dans l'enregistreur de localisation nominal qui gère l'abonné demandant l'établissement de l'appel. Les attributs de qualité de service pour les différents services supports UMTS sont donnés dans le tableau ci-dessous, pour chaque classe de trafic.

| **Classe de trafic Attributs** | **Trafic conversationnel** | **Trafic à flux continu** | **Trafic interactif** | **Trafic d'arrière-plan** |
|---|---|---|---|---|
| **Débit maximal MBR** | X | X | X | X |
| **Livraison dans le bon ordre** | X | X | X | X |
| **Taille maximale d'une SDU*** | X | X | X | X |
| **Information de format de SDU** | X | X | | |
| **Taux d'erreurs sur les SDU** | X | X | X | X |
| **Taux résiduel d'erreurs sur les bits** | X | X | X | X |
| **Remise de SDU erronées** | X | X | X | X |
| **Délai de transfert** | X | X | | |
| **Débit binaire garanti GBR** | X | X | | |
| **Priorité de traitement de trafic** | | | X | |
| **Priorité d'allocation/rétention** | X | X | X | X |

| | | | | |
|---|---|---|---|---|
| * SDU : Unité de données de service | | | | |

La fonction de contrôle d'admission d'appel peut être appelée à l'intérieur d'un noeud SGSN ou GGSSN pour vérifier que les ressources nécessaire à l'établissement d'un appel sont disponibles dans ce noeud. Mais elle peut aussi être appelée de l'extérieur d'un noeud pour vérifier que les interfaces Gn, lu, Gi du noeud ont les ressources nécessaires. Par conséquent la bande passante équivalente R réellement disponible dans un noeud peut être égale :
- soit à la bande passante équivalente du processeur équipant le noeud, SGSN ou GGSSN ;
- soit la bande passante équivalente d'un circuit virtuel ATM sur une interface lu, Gn, Gi ;
- soit la bande passante physique d'une liaison ou d'un routeur ;
- soit la bande passante d'un tunnel MPLS sur une interface Gn ou Gi ;
- soit la bande passante d'une classe DiffServ (EF ou Afx ou BE) ou d'un groupe de classes.

Tout d'abord, la qualité de service allouée pour un appel peut être ramenée autoritairement à sa valeur contractuelle, si le terminal demandeur a demandé une qualité de service supérieure à la valeur contractuelle. En cours de communication, la qualité de service effective peut être augmentée ou réduite, mais elle est toujours inférieure ou égale à celle demandée initialement lors de l'établissement de l'appel considéré.

Une procédure de réduction de la qualité de service est appelée lorsque la bande passante équivalente demandée n'est pas disponible. Pour le trafic conversationnel et à flux continu, la procédure de réduction de la qualité de service ne peut être basée que sur une réduction du débit binaire garanti. L'application demandeuse peut refuser cette réduction, ou bien peut l'accepter et alors choisir un autre algorithme de codage ou un autre codec pour être capable de fonctionner avec une bande passante plus réduite que celle demandée. C'est l'utilisateur final, et non le réseau, qui décide.

Pour le trafic interactif ou à flux continu, la procédure de réduction de la qualité de service est basé sur la priorité de traitement de trafic, qui a été demandée. Si la bande passante équivalente demandée n'est pas disponible, alors la qualité de service est réduite pour correspondre au niveau inférieur le plus proche, de la priorité de traitement de trafic. Et si la bande passante équivalente demandée n'est pas disponible non plus quand la qualité de service est ainsi réduite, alors la classe de trafic d'arrière-plan peut être proposée à l'utilisateur.

La qualité de service n'est jamais augmentée au-delà de la valeur contractuelle. Le contrôle d'admission d'appels peut être appelé pendant un changement de noeud de support GPRS de desserte, SGSN, dû à la mobilité d'un abonné. La qualité de service peut alors être augmentée en fonction de la qualité de service initialement allouée, ou de la qualité de service négociée par un précédent noeud SGSN. De la même manière, mais seulement pour les appels qui ont subi une réduction de la qualité de service, la qualité de service peut être augmentée en appelant périodiquement la fonction de contrôle d'admission d'appel pour pouvoir offrir une meilleure qualité de service si des ressources sont devenues disponibles.

Le contrôle d'admission d'appels peut être fonction en outre d'un paramètre appelé priorité d'allocation/rétention, et qui est défini dans le contrat de l'abonné. Il permet de favoriser certains abonnés pour l'établissement d'appel, par exemple des personnalités, des pompiers, des policiers, etc. Si la bande passante demandée n'est pas disponible, le contrôle d'admission d'appel peut choisir de :
- réduire la qualité de service (tout en gardant la même classe de service, dans le cas où le paramètre priorité d'allocation/rétention n'est pas utilisé par l'opérateur du réseau ;
- d'essayer de fournir la bande passante demandée en utilisant le paramètre priorité d'allocation/rétention pour choisir, parmi les appels déjà établis, un appel à interrompre ;
- d'utiliser le paramètre priorité d'allocation/rétention au cours d'une procédure inter noeuds de support GPRS de desserte SGSN : Si ce paramètre est égale à une valeur moyenne, et seulement pour un appel déjà établi, le nouveau noeud SGSN peut essayer de conserver la qualité de service négociée par le précédent noeud SGSN. Pour cela, il peut interrompre certains appels ayant la plus faible priorité d'allocation/rétention.

## Revendications

1. Procédé de traitement d'appels UMTS dans un réseau de transmission de paquets, ce réseau comportant des noeuds pour réseau UMTS ;
**caractérisé en ce que** pour accepter l'établissement d'un nouvel appel UMTS dans un noeud pour réseau UMTS, il consiste notamment à :
- calculer pour ce nouvel appel une bande passante équivalente en fonction de :
-- la qualité de service demandée pour ce nouvel appel ;
-- des attributs de qualité de service du support UMTS correspondant à cet appel ;
- puis comparer la somme de la bande passante équivalente pour le nouvel appel et des bandes passantes équivalentes pour tous les appels déjà établis dans ce noeud pour réseau UMTS, avec une valeur maximale prédéterminée ;
- et accepter le nouvel appel en garantissant la qualité de service demandée, seulement si la somme est inférieure ou égale à cette valeur maximale prédéterminée.

2. Procédé selon la revendication 1, **caractérisé en ce que** sa mise en oeuvre est déclenchée notamment par l'un des événements suivants :
- une demande d'établissement d'appel en mode paquet UMTS ou GSM ;
- un changement de qualité de service, initié par un terminal mobile ou par le réseau ;
- le changement du sous-système radio (BTS, RNC) de desserte d'un terminal mobile ;
- le changement de noeud de support GPRS de transit (SGSN) d'un terminal mobile ;
- le changement de noeud de support GPRS de desserte (GGSN) d'un terminal mobile.

3. Procédé selon la revendication 1, **caractérisé en ce qu'**il consiste en outre à réduire la qualité de service lorsque la bande passante équivalente demandée n'est pas disponible ;
**en ce que** pour le trafic conversationnel et à flux continu, la réduction de la qualité de service est basée que sur une réduction du débit binaire garanti ;
et **en ce que** pour le trafic interactif ou à flux continu, la procédure de réduction de la qualité de service est basée sur la priorité de traitement de trafic, qui a été demandée ; et **en ce que**, si la bande passante équivalente demandée n'est pas disponible non plus quand la qualité de service est réduite, alors une classe de trafic d'arrière-plan est proposée à l'utilisateur.

4. Procédé selon la revendication 1, **caractérisé en ce que**, si la qualité de service garantie à un appel est inférieure à celle demandée, il consiste à réitérer périodiquement les opérations mentionnées dans la revendication 1 pour offrir une meilleure qualité de service si des ressources sont devenues disponibles.

5. Noeud pour réseau UMTS, pour un réseau de transmission de paquets supportant un système radiotéléphonique UMTS, **caractérisé en ce que** ce noeud pour réseau UMTS comporte :
- des moyens pour calculer pour chaque nouvel appel une bande passante équivalente en fonction de :
-- la qualité de service demandée pour ce nouvel appel ;
-- des attributs de qualité de service du support UMTS correspondant à cet appel ;
- des moyens pour comparer la somme de la bande passante équivalente pour le nouvel appel et des bandes passantes équivalentes pour tous les appels déjà établis dans ce noeud pour réseau UMTS, avec une valeur maximale prédéterminée ;
- et des moyens pour accepter le nouvel appel en garantissant la qualité de service demandée, seulement si la somme est inférieure ou égale à cette valeur maximale prédéterminée.

6. Noeud pour réseau UMTS selon la revendication 5, **caractérisé en ce que** les moyens pour calculer pour chaque nouvel appel une bande passante équivalente sont déclenchés par :
- une demande d'établissement d'appel en mode paquet UMTS ou GSM ;
- un changement de qualité de service, initié par un terminal mobile ou par le réseau ;
- le changement du sous-système radio (BTS, RNC) de desserte d'un terminal mobile ;
- le changement de noeud de support GPRS de transit (SGSN) d'un terminal mobile ;
- le changement de noeud de support GPRS de desserte (GGSN) d'un terminal mobile.

7. Noeud pour réseau UMTS selon la revendication 5, **caractérisé en ce qu'**il comporte en outre des moyens pour réduire la qualité de service lorsque la bande passante équivalente demandée n'est pas disponible ;
**en ce que** pour le trafic conversationnel et à flux continu, la réduction de la qualité de service est basée que sur une réduction du débit binaire garanti ;
et **en ce que** pour le trafic interactif ou à flux continu, la procédure de réduction de la qualité de service est basée sur la priorité de traitement de trafic, qui a été demandée ; et **en ce que**, si la bande passante équivalente demandée n'est pas disponible non plus quand la qualité de service est réduite, alors ces moyens pour réduire proposent une classe de trafic d'arrière-plan à l'utilisateur.

8. Noeud pour réseau UMTS selon la revendication 5, **caractérisé en ce qu'**il comporte en outre des moyens pour, si la qualité de service garantie à un appel est inférieure à celle demandée, comparer périodiquement la somme de la bande passante équivalente demandée pour le nouvel appel et des bandes passantes équivalentes pour tous les appels déjà établis dans ce noeud pour réseau UMTS, avec une valeur maximale prédéterminée ; et pour offrir une meilleure qualité de service si des ressources sont devenues disponibles.
